# EUROPEAN PATENT SPECIFICATION

(11) **EP 3 010 623 B1**
(45) Date of publication and mention of the grant of the patent: **17.10.2018**
(21) Application number: 13885139.9
(22) Date of filing: 23.05.2013
(51) Int. Cl.: B01D 53/34, F25J 3/02, C01B 32/50, C01B 17/56, C01B 17/60

(54) **METHOD FOR COMBINED SOX AND CO2 REMOVAL FROM FLUE GAS**
VERFAHREN FÜR KOMBINIERTE SOX- UND CO2-ENTFERNUNG AUS RAUCHGAS
PROCÉDÉ POUR L'ÉLIMINATION COMBINÉE DE SOX ET DE CO2 À PARTIR DE GAZ DE CARNEAU

(43) Date of publication of application: 27.04.2016
(73) Proprietor: Bechtel Power Corporation, Frederick, Maryland 21703 (US)
(72) Inventor: WEN, Harvey, Boyds, MD 20841-4379 (US); KIMTANTAS, Charles, L., Sugar Land, TX 77479-1530 (US)
(74) Representative: Strehl Schübel-Hopf & Partner
(86) International application number: PCT/US2013/042425
(87) International publication number: WO 2014/189515

(56) References cited:
- EP-A1- 0 503 910
- WO-A1-2008/099357
- US-A- 4 110 087
- US-A1- 2013 129 591
- US-B2- 6 737 031
- US-B2- 7 416 716
- US-B2- 8 420 037

## Description

### FIELD OF THE INVENTION

The present invention provides a method to remove sulfur oxides and carbon dioxide from oxyfuel combustion power plants.

### BACKGROUND OF THE INVENTION

The combustion of fossil fuel produces a flue gas with dilute SO₂ and CO₂ which are difficult to remove in a single removal process. The incumbent technology for their removal is to remove SO₂ with a flue gas desulfurization (FGD) process and then remove CO₂ with a solvent scrubbing. The FGD process requires the use of a reagent such as limestone slurry, and it generates a waste product such as calcium sulfate that needs to be disposed offsite. The current technology for capturing CO₂ from the flue gas is by solvent scrubbing. Many solvents are under development, including amines that are tolerant to the impurities in coal fired boiler flue gas as well as low in solvent regeneration energy. Current solvent technology requires substantial amount of steam to regenerate the spent solvent for recycle, and this can reduce the power plant output by as much as 25%.

Another method to capture CO₂ from flue gas is the use of oxyfuel combustion. In an oxyfuel combustion boiler, fossil fuel (coal, oil or gas) is combusted using a high purity oxygen, generally 95% oxygen or higher. This method of combustion reduces the amount of nitrogen in the flue gas, thus facilitating carbon dioxide capture. The flue gas volume from an oxy combustion boiler is about only 25% that of an air fired boiler of the same size. The flue gas is first cooled to recover moisture in the flue gas. The dried oxyfuel flue gas contains about 90% of CO₂ compared to about 14% for an air-fired boiler flue gas. The use of oxyfuel combustion eliminates the need for a CO₂ concentrating process such as an amine plant.

The generic oxy-combustion process under development by the power industry is generally comprised of a wet flue gas desulfurization (FGD) unit for SO₂ capture followed by a CO₂ purification unit (CPU). A portion of desulfurized gas is re-circulated back to the boiler as a modulating gas to quench the furnace temperature due to oxygen firing. The CPU is comprised a cryogenic type cooling and separation of CO₂ from oxygen and nitrogen gases which were infiltrated into the flue gas due to air leakage in the downstream emission control equipment.

This invention provides a method to remove SO₂ and CO₂ in a combined process rather than remove them using two separate processes. In addition, with this invention, the SO₂ removed is a liquid product that can be transported in vessels and is a saleable product. The CO₂ product purity can be controlled to meet the final product applications. The combined SO₂ and CO₂ removal process generates no desulfurization waste product, and offers a lower capital cost option for carbon capture. This process is superior to the combined SOx and CO₂ removal process described in U.S. Patent No. 7,416,716 where SO₂ is removed as sulfuric acid rather than a liquid product. It is also superior to the process described in U.S. Patent No. 6,737,031 where calcium based reagent is needed to capture SO₂. Also WO2008/099357 A1 and EP0503910 A1 disclose processes for removing carbon dioxide and sulphur dioxide from flue gases.

### SUMMARY OF THE INVENTION

The present invention relates to a method for combined SO₂ and CO₂ removal from flue gas resulting from an oxyfuel combustion according to claim 1.

### BRIEF DESCRIPTION OF THE DRAWINGS

FIG. 1 is a process flow diagram for the combined removal process;
FIG. 2 shows the primary separation column configuration; and
FIGS. 3 and 4 show the CO₂ and SO₂ columns, respectively.

### DETAILED DESCRIPTION OF THE INVENTION

In an oxyfuel combustion power plant, fossil fuel is combusted in a furnace with oxygen. The flue gas of oxyfuel combustion is comprised mainly of carbon dioxide, moisture, sulfur dioxide, and small amounts of other gases. This invention provides a method of removing moisture, sulfur oxides, and carbon dioxide with cooling, fractionation and separation of these components. Sulfur dioxide is separated and can be transported either in a gaseous or liquid form for export. Carbon dioxide is also separated and compressed for send out for either industrial use or sequestration.

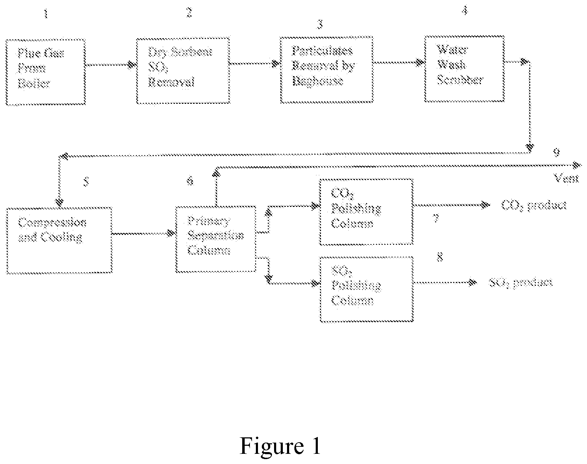

Figure 1 is a block flow diagram for the combined SOx and CO₂ removal process. Hot flue gas (1) from a fossil fuel fired boiler exhaust is treated with a dry sorbent SO₃ removal (2) where either dry lime or Trona can be used as its reagent. After SO₃ removal, the particulates in the flue gas are removed by a baghouse (3). The particulate free gas is washed in a water wash column for further cleaning of trace materials and cooling in a water wash scrubber (4). After scrubbing, the washed flue gas enters a multistage compression unit which is equipped with intercoolers (5) where CO₂ and SO₂ are condensed. The condensed liquid enters the primary separation column (6) where non-condensable SO₂, and CO₂ are separated. From the primary separation column, a CO₂ rich stream is withdrawn for further fractionation in a polishing column (7), and a SO₂ rich stream is withdrawn for further fractionation in a polishing column (8). The final products are high purity SO₂ and CO₂.

The process can be divided into the following subsystems: Hot flue gas pretreatment; compression and cooling; primary separation; CO₂ polishing column; SO₂ polishing column; and power recovery

### Pretreatment

Hot flue gas (1) pretreatment includes flue gas SO₃ removal by dry sorbent injection (2). Candidate sorbent is Trona, which is a commercially proven chemical for selectively removal of SO₃ in flue gas. SO₃ exists in flue gas especially if the fuel burned in the boiler is coke or heavy oil where vanadium exists in the fuel. Vanadium is a catalyst to convert SO₂ to SO₃ in the boiler. The removal of SO₃ reduces the formation of sulfuric acid in the flue gas downstream. After the bulk of SO₃ is removed, the flue gas needs to be further cleaned with a baghouse or electrostatic precipitator (3). The particulates free flue gas is then washed and cooled in a water scrubber (4). To control the acidity of the wash scrubber water, an alkali material can be added to increase its pH value and water blowdown is used to control the water quality. This pretreatment system is commercially proven and is necessary to prepare the feed gas to the combined SO₂ and CO₂ removal process.

### Compression and Cooling

The treated flue gas is compressed by a multi-stage compressor with intercoolers (5) to about 46,9 bar (680 psia). The last stage of the compressor outlet gas is chilled by refrigerant to cool the gas to below ambient temperature.

### Primary Separation Column

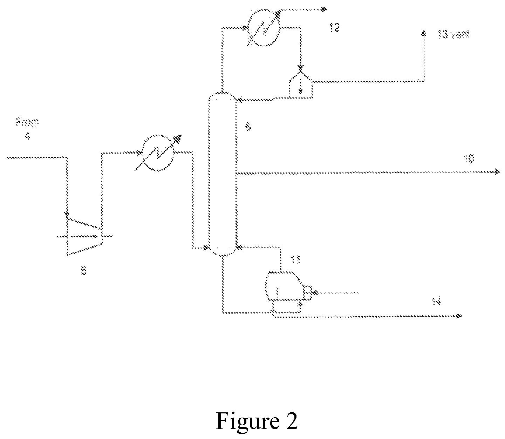

Figure 2 shows the Primary Separation Column configuration. The chilled flue gas enters the primary separation column (6) where the primary separation of CO₂, SO₂ and non-condensable gases take place. The column is equipped with a heated reboiler (11), and a cooled reflux heat exchanger with a reflux condenser knockout drum (12). The vent gas (13) is very low in CO₂ and SO₂ and is vented through an expander (26) for power recovery. The heat supply to the reboiler is recovered from compression intercoolers and other waste heat sources.

A stream of enriched CO₂ (10) is withdrawn from a selected tray location. It is located near the middle of the column, but its exact location needs to be determined based on actual project flue gas composition. The CO₂ rich stream (10) is sent to the CO₂ polishing column (7).

A stream of enriched SO₂ (14) is withdrawn from the reboiler through its weir well. It is sent to the SO₂ polishing column (8).

If a coal fired boiler flue gas is used as the feed gas, the primary separation column can perform a 78% (by weight) CO₂ recovery, and 99% (by weight) SO₂ recovery.

### CO₂ Polishing Column

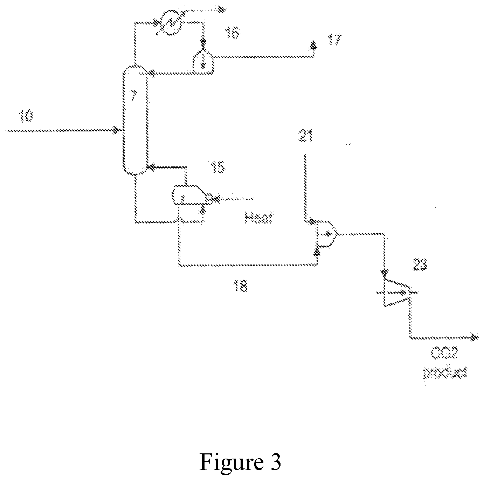

Figure 3 shows the CO₂ column. The CO₂ polishing column (7) is comprised of a reboiler and a refrigeration cooled reflux cooler, with a knock out drum (16). The heat supply for the reboiler (15) is recovered low level waste heat from the power plant. The reflux vent (17) is comprised of mainly non-condensable gases, and is combined with vents from other columns and sent to an expander (26) for power recovery. The high purity CO₂ product (18) is withdrawn from the reboiler weir well and mixed with the CO₂ stream from the SO₂ column reflux overhead condensate line (21) and sent to a compressor (23) to increase its send-out pressure.

### SO₂ Polishing Column

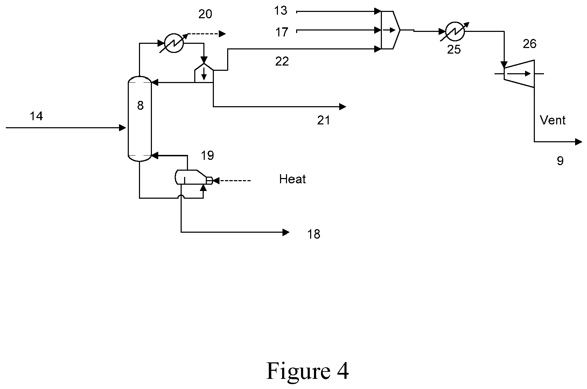

Figure 4 shows the SO₂ column. The SO₂ polishing column (8) is comprised of a reboiler and a refrigeration cooled reflux cooler with a knock out drum (20). The heat supply for the reboiler (19) is a recovered low level waste heat from the power plant. The reflux overhead vent (22) is vented to an expander train (26), and the reflux condensate (21) is comprised mainly of CO₂ and is combined with Stream (18) and sent to the CO₂ product compressor (23).

### Power Recovery

Vent gas streams from all columns are high pressure gases. Stream (13) vent from the primary column, stream (17) from the CO₂ polishing column, and stream (22) from SO₂ polishing column are combined and heated in a heater (25), and then sent to an expander (26) for power recovery before final venting.

### Performance

Table 1 below shows the gas composition and removal efficiencies for both CO₂ and SO₂. The Feed Gas composition used is based on a DOE/NETL study No. 2007/1291, Revision 2 dated August 2008, entitled "Pulverized Coal Oxycombustion Power Plants". The reference power plant is a coal fired power plant burning an Eastern Bituminous coal. It has a power output of 550 MW. As shown in the table, the computer simulated removal efficiency is about 93.92% for CO₂ capture, and 99.96% for SO₂ capture.

**Table 1: CO₂ and SO₂ Removal Efficiencies**

| | | Feed Gas | CO₂ Product | SO₂ Product |
|---|---|---|---|---|
| Temp | F | 350 | 75.3 | 120 |
| Pressure | psia | 14.2 | 2,530 | 150 |
| Ar | lb/hr | 50,745 | 2,175 | 0 |
| CO2 | lb/hr | 1,283,533 | 1,199,478 | 264 |
| H2O | lb/hr | 283,918 | 1 | 324 |
| N2 | lb/hr | 96,439 | 2,764 | 0 |
| O2 | lb/hr | 24,892 | 1,107 | 0 |
| SO2 | lb/hr | 27,280 | 11.5 | 27,270 |
| Total | lb/hr | 1,766,807 | 1,205,536 | 27,858 |
| Removal eff. | % | | 93.92% | 99.96% |
| | | | | |
| SI Units | | Feed Gas | CO₂ Product | SO₂ product |
| Temp | °C | 177 | 24,1 | 48,9 |
| Pressure | bara | 0,98 | 174 | 10,3 |
| Ar | kg/hr | 23.017 | 987 | 0 |
| CO2 | kg/hr | 582.001 | 544.074 | 120 |
| H2O | kg/hr | 128.783 | 0,5 | 177 |
| N2 | kg/hr | 43.744 | 1254 | 0 |
| O2 | kg/hr | 11.291 | 502 | 0 |
| SO2 | kg/hr | 12.374 | 5,2 | 12.369 |
| Total | kg/hr | 801.410 | 546.822 | 12.636 |
| Removal eff. | % | | 93,92% | 99,96% |

## Claims

1. A method for combined SO₂ and CO₂ removal from flue gas resulting from an oxyfuel combustion, which includes removing both CO₂ and SO₂ in a primary fractionation column and two polishing columns, the method comprising:
a) pretreating hot flue gas resulting from an oxyfuel combustion, including flue gas SO₃ removal (2) by dry sorbent injection;
b) compressing the treated hot flue gas by a multi-stage compressor and cooling the flue gas to condense CO₂ and SO₂ (5);
c) separation of CO₂, SO₂ and non-condensable gases (13) in a primary fractionation column (6);
d) subjecting the CO₂ and SO₂ to separate polishing columns (7/8) for further separation of CO₂ and SO₂ from non-condensable gases (17/22); and
e) combining streams of the non-condensable gases (13/17/22) from the primary fractionation column (6) and the two polishing columns (7/8) for power recovery.

2. The method as recited in claim 1, wherein the SO₂ removed is a liquid product.

3. The method as recited in claim 1, wherein flue gas SO₃ removal is by dry sorbent injection.

4. The method as recited in claim 3, wherein the sorbent is dry lime or trona.

5. The method as recited in claim 1, wherein after SO₃ is removed, flue gas is further cleaned with a baghouse (3) or electrostatic precipitator.

6. The method as recited in claim 5, wherein the particulates-free flue gas is washed and cooled in a water scrubber (4) before the compressing step b).

7. The method as recited in claim 6, further including an alkali material in the water scrubber water.

8. The method as recited in claim 1, wherein the treated flue gas is compressed to 46,9 bar (680 psia).

9. The method as recited in claim 1, wherein a coal fired boiler flue gas is used as the feed gas.

10. The method as recited in claim 9, wherein the primary fractionation column (6) performs a 60% to 80% by weight CO₂ recovery, and a 95% to 100% by weight SO₂ recovery.

11. The method as recited in claim 1, wherein the polishing columns (7/8) are connected to a reboiler (15/19) and a refrigeration cooled reflux cooler with a knock out drum (16/20).

12. The method as recited in claim 10, wherein the primary fractionation column (6) performs a 78% by weight CO₂ recovery, and a 99% by weight SO₂ recovery.

## Patentansprüche

1. Verfahren zum kombinierten Entfernen von SO₂ and CO₂ von aus der Oxy-Treibstoffverbrennung erhaltenem Rauchgas, welches das Entfernen von sowohl CO₂ als auch SO₂ in einer ersten Fraktioniersäule und zwei Poliersäulen umfasst, wobei das Verfahren umfasst:
a) das Vorerhitzen von aus der Oxy-Treibstoffverbrennung erhaltenem heißen Rauchgas, welches die Rauchgas-SO₃-Entfernung (2) durch Trockensorptionsmitteleinspritzung umfasst;
b) das Komprimieren des behandelten heißen Rauchgases mittels eines Mehrstufenkompressors und das Kühlen des Rauchgases unter Kondensation von CO₂ und SO₂ (5);
c) das Trennen von CO₂, SO₂ und nicht-kondensierbaren Gasen (13) in einer primären Fraktioniersäule (6);
d) das Behandeln von CO₂ und SO₂ in getrennten Poliersäulen (7/8) zur weiteren Trennung von CO₂ und SO₂ von nicht-kondensierbaren Gasen (17/22); und
e) das Kombinieren von Strömen der nicht-kondensierbaren Gase (13/17/22) von der ersten Fraktioniersäure (6) und den zwei Poliersäulen (7/8) zur Stromgewinnung.

2. Verfahren nach Anspruch 1, wobei das entfernte SO₂ ein Flüssigprodukt ist.

3. Verfahren nach Anspruch 1, wobei die Rauchgas-SO₃-Entfernung mittels Trockensorptionsmitteleinspritzung erfolgt.

4. Verfahren nach Anspruch 3, wobei das Sorptionsmittel Trockenkalk oder Trona ist.

5. Verfahren nach Anspruch 1, wobei nach dem Entfernen von SO₃ das Rauchgas mit einem Schlauchfilter (3) oder elektrostatischem Abscheider weiter gereinigt wird.

6. Verfahren nach Anspruch 5, wobei vor der Komprimierstufe b) das teilchenfreie Rauchgas in einem Wasserwäscher (4) gewaschen und gekühlt wird.

7. Verfahren nach Anspruch 6, das außerdem an alkalisches Material in dem Wasser des Wasserwäschers enthält.

8. Verfahren nach Anspruch 1, wobei das behandelte Rauchgas auf 46,9 bar (680 psia) komprimiert wird.

9. Verfahren nach Anspruch 1, wobei ein Rauchgas eines kohlebetriebenen Heizkessels als das Einspeisungsgas eingesetzt wird.

10. Verfahren nach Anspruch 9, wobei in der ersten Fraktioniersäule (6) eine CO₂-Gewinnung von 60 bis 80 Gewichtsprozent eine SO₂-Gewinnung von 95 bis 100 Gewichtsprozent erfolgt.

11. Verfahren nach Anspruch 1, wobei die Poliersäulen (7/8) zu einem weiteren Heizkessel (15/19) und einem kühlgerätgekühlten Rückflusskühler mit einem Abscheider (16/20) verbunden sind.

12. Verfahren nach Anspruch 10, wobei in der ersten Fraktioniersäule (6) eine CO₂-Gewinnung von 78 Gewichtsprozent und eine SO₂-Gewinnung von 99 Gewichtsprozent erfolgt.

## Revendications

1. Procédé d'élimination combinée de SO₂ et CO₂ à partir d'un gaz de combustion résultant d'une combustion d'oxygaz, qui comprend l'élimination de CO₂ et SO₂ dans une colonne de fractionnement primaire et deux colonnes de polissage, le procédé comprenant :
a) le prétraitement d'un gaz de combustion chaud résultant d'une combustion d'oxygaz, comprenant l'élimination de SO₃ du gaz de combustion (2) par injection de sorbant sec ;
b) la compression du gaz de combustion chaud traité par un compresseur à étages multiples et le refroidissement du gaz de combustion pour condenser CO₂ et SO₂ (5) ;
c) la séparation de CO₂, SO₂ et des gaz non condensables (13) dans une colonne de fractionnement primaire (6) ;
d) la soumission de CO₂ et SO₂ sur des colonnes de polissage séparées (7/8) pour la séparation supplémentaire de CO₂ et SO₂ à partir des gaz non condensables (17/22) ; et
e) la combinaison des flux des gaz non condensables (13/17/22) provenant de la colonne de fractionnement primaire (6) et des deux colonnes de polissage (7/8) pour récupération d'énergie.

2. Procédé selon la revendication 1, dans lequel le SO₂ éliminé est un produit liquide.

3. Procédé selon la revendication 1, dans lequel l'élimination de SO₃ du gaz de combustion est effectuée par injection de sorbant sec.

4. Procédé selon la revendication 3, dans lequel le sorbant est de la chaux sèche ou du trona.

5. Procédé selon la revendication 1, dans lequel, une fois que SO₃ est éliminé, le gaz de combustion est purifié plus avant avec une installation de filtres à sac (3) ou un précipitateur électrostatique.

6. Procédé selon la revendication 5, dans lequel le gaz de combustion exempt de particules est lavé et refroidi dans un laveur à eau (4) avant l'étape de compression b).

7. Procédé selon la revendication 6, comprenant en outre un matériau alcalin dans l'eau du laveur à eau.

8. Procédé selon la revendication 1, dans lequel le gaz de combustion traité est comprimé à 46,9 bar (680 psia).

9. Procédé selon la revendication 1, dans lequel un gaz de combustion de chaudière à charbon est utilisé en tant que gaz d'alimentation.

10. Procédé selon la revendication 9, dans lequel la colonne de fractionnement primaire (6) effectue une récupération de CO₂ de 60 % à 80 % en poids, et une récupération de SO₂ de 95 % à 100 % en poids.

11. Procédé selon la revendication 1, dans lequel les colonnes de polissage (7/8) sont raccordées à un rebouilleur (15/19) et un refroidisseur à reflux refroidi par réfrigération avec un séparateur (16/20).

12. Procédé selon la revendication 10, dans lequel la colonne de fractionnement primaire
(6) effectue une récupération de CO₂ de 78 % en poids, et une récupération de SO₂ de 99 % en poids.
